(19) Europäisches Patentamt
European Patent Office
Office européen des brevets

(11) Publication number: 0 081 265
A1

# (12) EUROPEAN PATENT APPLICATION

(21) Application number: 82201529.3

(22) Date of filing: 02.12.82

(51) Int. Cl.$^3$: C 04 B 31/34
G 04 B 31/04

(30) Priority: 03.12.81 NL 8105453

(43) Date of publication of application:
15.06.83 Bulletin 83/24

(84) Designated Contracting States:
AT BE CH DE FR GB IT LI LU NL SE

(71) Applicant: STAMICARBON B.V.
Postbus 10
NL-6160 MC Geleen(NL)

(72) Inventor: Jansen, Jozef M. A.
Margrietlaan 15
NL-6165 CR Geleen(NL)

(72) Inventor: Vincent, Joseph A. J. M.
Hubertusstraat 73
NL-6191 PB Beek (L.)(NL)

(74) Representative: Van de Panne, Vitus Nicolaas et al,
Octrooibureau DSM Postbus 9
NL-6160 MA Geleen(NL)

## (54) Method of reinforcing water-hardenable inorganic materials.

(57) Method of reinforcing water-hardenable inorganic materials with polyalkene fibres or fibre networks, the polyalkene being stabilized by a metal phosphonate or metal phosphite with the formula

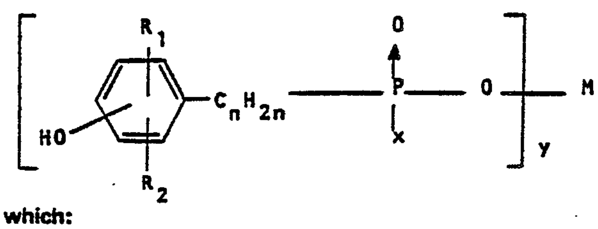

in which:

$R_1$ is an alkyl group with 1-6 carbon atoms,
$R_2$ is a hydrogen atom or an alkyl group with 1-6 carbon atoms,
n take a value 1-4,
y is the ratio of the valencies of the metal atom and the organic phosphonate or phosphite group,
x is the residue $-O^-$, $OR_3$, or $R_4$, where $R_3$ is an alkyl, cycloalkyl, or aryl group with 1-30 carbon atoms and $R_4$ is an alkyl, cycloalkyl, or aryl group with 1-30 carbon atoms, and
M is a metal.

EP 0 081 265 A1

STAMICARBON B.V.
Inventors: Jozef M.A. JANSEN, Geleen
Joseph A.J.M. VINCENT, BEEK (L)



# METHOD OF REINFORCING WATER-HARDENABLE INORGANIC MATERIALS

The invention relates to a method of reinforcing water-hardenable inorganic materials with polyalkene fibres or fibre networks, using one or more stabilizers.

A method of this type is known from European Patent Application No. 3245, laid open to public inspection, in which preference is expressed for a stabilizer combination consisting of a metal deactivator and an antioxidant. It has been found, however, that such a combination of stabilizers cannot maintain the mechanical properties of the polyalkene fibres at the desired level for an adequate period. Since water-hardenable inorganic materials in the hardened state are mainly used in the construction of buildings, particularly in the form of slabs, they must retain their mechanical properties for a very long time. The polyalkene fibres must therefore show no significant signs of degradation after a period of at least decades.

The aim of the present invention is to provide a method whereby water-hardenable inorganic materials are reinforced with polyalkene fibres which are stabilized in such a way that they retain their mechanical properties for a very long time.

According to the invention, this aim can be achieved by incorporating into the polyalkene a stabilizer consisting of a metal phophonate of metal phosphite having the formula

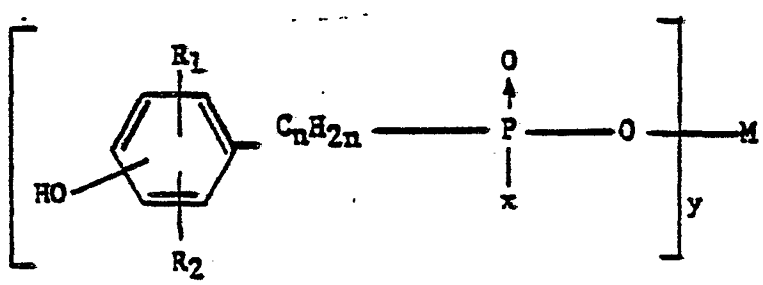

in which:

$R_1$ is an alkyl group with 1-6 carbon atoms,

$R_2$ is a hydrogen atom or an alkyl group with 1-6 carbon atoms,

n takes a value 1-4,

y is the ratio of the valences of the metal atom and the organic phosphonate or phosphite group,

x is the residue $-O^-$, $OR_3$, or $R_4$, where $R_3$ is an alkyl, cycloalkyl, or aryl group with 1-30 carbon atoms and $R_4$ is an alkyl, cycloalkyl, or aryl group with 1-30 carbon atoms, and

M is a metal.

The use of metal phosphonates or metal phosphites for the stabilization of alkene polymers is in itself known, although the very large number of stabilizers or stabilizer combinations that have been proposed for this purpose includes stabilizers that give much better results than metal phosphonates or metal phosphites when used in polyalkenes. For example, it is known that in polypropylene even a high concentration of a metal phosphonate gives only about 85 % of the stability conferred by a carefully selected phenolic antioxidant.

Metal phosphonates or metal phosphites are also used in cases in which a high light stability is required in addition to thermal stability. Another use for them is as additives for coating polyalkene fibres. When polyalkene fibres are used to reinforce water-hardenable inorganic materials the light stability and the possibility of dying are of no consequence.

It is therefore particularly surprising to find that the use of metal phosphonates or metal phosphites in polyalkene fibres incorporated in water-hardenable inorganic materials gives (unexpectedly) much better results with regard to stability, particularly the long-term stability at low temperatures, than do the customary phenolic stabilizers wich are superior in other applications.

The metals in the metal phosphonates or metal phosphites are preferably chosen from the group comprising sodium, potassium, magnesium, calcium, boron, chromium, manganese, iron, cobalt, nickel, copper, zinc, aluminium, and tin.

They are more preferably chosen from the group comprising calcium, cobalt, nickel, and zinc, nickel being particularly preferred.

The most preferred metal phosphonates or metal phosphites have a structure represented by the general formula given above, in which $R_1$ is a tertiary butyl group and $R_2$ is Hydrogen, methyl, ethyl or a tertiary butyl group. In a particularly preferred embodiment n is equal to 1. It is advantageous if x is an $OR_3$ or $R_4$ group, $R_3$ being an alkyl group with 1-4 C-atoms. Mixtures of such compounds can also be used.

As stated before, the metal phosphonates and metal phosphites are effective at the relatively low concentrations of 0.02-0.5 wt-% with respect to the polyalkene. These are therefore the preferred concentrations, particular preference being given to concentrations of 0.05-0.25 wt-%.

In addition to the necessary metal phosphonates and metal phosphites, other - conventional - stabilizers may be incorporated in the polyalkene, the greatest preference being given to the phenolic antioxidants, which may be present in quantities of 0.01-1.00 wt-% with respect to the polyalkene.

The polyalkene of the fibres may be polyethene, polypropene, polybutene, or mixtures of these polymers, or related copolymers such a ethene-hexene copolymers and propene-ethene copolymers. In particular, it has been found that, when combined with the said metal phosphonates and phosphites, a mixture consisting predominantly of polypropene with a minor proportion of polyethene, preferably with less than 25 wt-% of the polyethene, with respect to the polyalkene mixture, gives considerably better results in water-hardenable inorganic materials than do polyalkene mixtures that contain conventional stabilizers such a phenolic antioxidants (see the example).

It may be seen from the example that the metal phosphonates improve the long-term stability of the polyalkene fibres, particularly at lower temperatures.

The water-hardenable inorganic material may be a known material such as plaster or cement, Portland cement being the most preferred material.

The polyalkene can be incorporated into the water-hardenable materials in a variety of forms and states. For example, it is possible to use loose fibres made by spinning or by means of shearing forces in a precipitating polyalkene solution. The fibres can also be made by the sudden expansion of a polyalkene solution. To facilitate the incorporation of these discrete fibres into the mass of water and water-hardenable material, hereafter referred to as mortar, the fibres may be treated, for example, with surfactants and the surface may be modified with inorganic particles or may be made hydrophilic by chemical and/or physical treatment such as oxidation and corona discharge.

In the preferred arrangement, however, the fibres are interconnected to form networks, which may be treated as described above. The most economic method of forming such networks is described in European Patent Application No. 3245, laid open to public inspection. Herein the polyalkene is extruded to a film which is stretched out, fibrillated, and pulled out to form networks.
Fibres obtained from these networks by comminuting the networks by chopping or cutting may also advantageously be used.

In addition to the said stabilizers the polyalkenes may contain other additives such as lubricants, fillers, and substances that improve the adhesion between the fibres and the water-hardenable inorganic material.

Example

A propene-ethene periodic block copolymer with an ethene content of 9 wt-% and a melt index 230/2 = 1.0 g/10 min was mixed with one of the three different stabilizer combinations defined below and spun into filaments of 10 g/9000 m.

The filaments were cast in a mortar consisting of Portland cement and water with a water-cement factor of 0.3 and the mortar was allowed to set.

The end of the filament protruding from the set material was loaded with a weight of 0.01 N and the entire arrangement was placed in practically stationary air in an oven at 80 °C, 100 °C, and 120 °C.

The three stabilizer combinations were as follows:

Stabilizer 1:

0.1 wt-% of nickel-bis(o-ethyl-(3,5-di-tert.butyl-4-hydroxybenzyl)) phosphonate;

0.1 wt-% of tris(2,4-di-tert.butylphenol) phosphite.

Stabilizer 2:

0.1 wt-% of calcium-bis(3,5-di-tert.butyl-4-hydroxybenzyl monoethyl) phosphonate;

0.1 wt-% of tris(2,4-di-tert.butylphenol) phosphite.

Stabilizer 3 (comparison example):

0.1 wt-% of 2,6-di-tert.butyl-4-methylphenol;
0.15 wt-% of pentaerithrityl tetrakis(3-(3,5-di-tert.butyl-4-hydroxyphenyl)) propionate.

The following table gives the time (in hours) that elapsed before the filament broke, for the various stabilizer combinations at different temperatures.

Table

| | 80 °C | 100 °C | 120 °C |
|---|---|---|---|
| Stabilizer 1 | 8500 | 880 | 40 |
| Stabilizer 2 | 2100 | 236 | 21 |
| Stabilizer 3 | 240 | 124 | 21 |

## CLAIMS

1. Method of reinforcing water-hardenable inorganic materials with polyalkene fibres or fibre networks using one or more stabilizers, characterized in that in the polyalkene is incorporated a stabilizer consisting of a metal phosphonate or metal phosphite with the formula

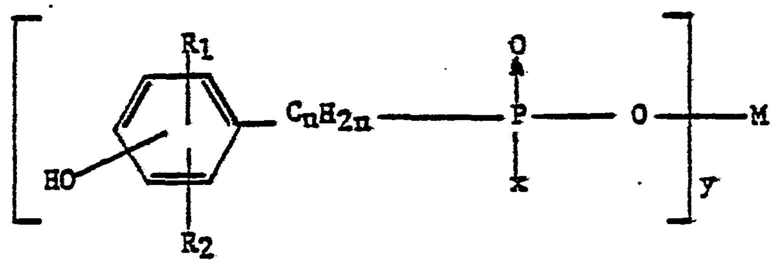

in which:

$R_1$ is an alkyl group with 1-6 carbon atoms,

$R_2$ is a hydrogen atom or an alkyl group with 1-6 carbon atoms,

n takes a value 1-4,

y is the ratio of the valencies of the metal atom and the organic phosphonate or phosphite group,

x is the residue $-O^-$, $OR_3$, or $R_4$, where $R_3$ is an alkyl, cycloalkyl, or aryl group with 1-30 carbon atoms and $R_4$ is an alkyl, cycloalkyl, or aryl group with 1-30 carbon atoms, and

M is a metal.

2. Method according to claim 1, characterized in that the metal is selected from the group comprising sodium, potassium, magnesium, calcium, boron, chromium, manganese, iron, cobalt, nickel, copper, zinc, aluminium, and tin.

3. Method according to claim 1 or 2, characterized in that the metal is selected from the group comprising calcium, cobalt, nickel, and zinc.

4. Method according to anyone of claims 1-3, characterized in that $R_1$ is a tertiary butyl group and $R_2$ is hydrogen or a methyl, ethyl, or tertiary butyl group.

5. Method according to anyone of claims 1-4, characterized in that n is equal to 1.

6. Method according to anyone of claims 1-5, characterized in that x is $O^-$, $OR_3$, or $R_4$, where $R_3$ is an alkyl group with 1-4 C-atoms and $R_4$ is an ethyl, cyclohexyl, or phenyl group.

7. Method according to anyone of claims 1-6, characterized in that the metal phosphonate or metal phosphite is incorporated in a quantity of between to 0.02-0.5 wt-% with respect to the polyalkene.

8. Method according to claim 7, characterized in that the metal phosphonate or metal phosphite is incorporated in a quantity of between to 0.05-0.25 wt-% with respect to the polyalkene.

9. Method according to anyone of claims 1-8, characterized in that a phenolic antioxidant is also incorporated in the polyalkene.

10. Method according to anyone of claims 1-9, characterized in that the polyalkene consists principally of propylene.

11. Method according to anyone of claims 1-10, characterized in that the water-hardenable inorganic material is cement.

12. Method according to claim 11, characterized in that the cement is Portland cement.

European Patent Office

# EUROPEAN SEARCH REPORT

0081265
Application number

EP 82 20 1529

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,Y | EP-A-0 003 245 (STAMICARBON B.V.)<br>* Claims 1,13,14 * | 1,4 | C 04 B 31/34<br>C 04 B 31/04 |
| Y | FR-A-1 320 375 (J.R. GEIGY S.A.)<br>* Page 1 * | 1 | |
| | | | TECHNICAL FIELDS SEARCHED (Int. Cl. 3) |
| | | | C 08 K<br>C 04 B<br>B 28 B |

The present search report has been drawn up for all claims

| Place of search | Date of completion of the search | Examiner |
|---|---|---|
| THE HAGUE | 09-02-1983 | STANGE R.L.H |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503. 03.82